(19) **Europäisches Patentamt / European Patent Office / Office européen des brevets**

(11) **EP 2 741 399 B1**

(12) **EUROPEAN PATENT SPECIFICATION**

(45) Date of publication and mention of the grant of the patent:
**20.05.2020 Bulletin 2020/21**

(21) Application number: **11870544.1**

(22) Date of filing: **29.08.2011**

(51) Int Cl.:
*H02K 1/27* *(2006.01)*     *H02K 21/00* *(2006.01)*
*H02K 1/24* *(2006.01)*

(86) International application number:
**PCT/CN2011/079059**

(87) International publication number:
**WO 2013/020310 (14.02.2013 Gazette 2013/07)**

(54) **MOTOR ROTOR AND MOTOR HAVING SAME**

MOTORROTOR UND MOTOR DAMIT

ROTOR DE MOTEUR ET MOTEUR COMPORTANT CE ROTOR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.08.2011 CN 201110224391**

(43) Date of publication of application:
**11.06.2014 Bulletin 2014/24**

(73) Proprietors:
• **Gree Electric Appliances, Inc. of Zhuhai**
**Zhuhai, Guangdong 519070 (CN)**
• **Gree Green Refrigeration Technology Center Co.,Ltd**
**Zhuhai, Guangdong 519070 (CN)**

(72) Inventors:
• **HUANG, Hui**
**Zhuhai**
**Guangdong 519070 (CN)**
• **HU, Yusheng**
**Zhuhai**
**Guangdong 519070 (CN)**
• **CHEN, Dongsuo**
**Zhuhai**
**Guangdong 519070 (CN)**
• **CHEN, Huajie**
**Zhuhai**
**Guangdong 519070 (CN)**
• **XIAO, Yong**
**Zhuhai**
**Guangdong 519070 (CN)**
• **ZENG, Xueying**
**Zhuhai**
**Guangdong 519070 (CN)**
• **ZHANG, Wenming**
**Zhuhai**
**Guangdong 519070 (CN)**

(74) Representative: **Haseltine Lake Kempner LLP**
**Redcliff Quay**
**120 Redcliff Street**
**Bristol BS1 6HU (GB)**

(56) References cited:
EP-A2- 1 990 895        CN-A- 1 243 351
CN-A- 101 304 204      CN-A- 101 359 847
CN-U- 202 142 925      CN-Y- 2 681 433
JP-A- H11 275 783       JP-A- 2008 136 298
JP-A- 2010 213 553      JP-B2- 3 681 459
US-A- 4 358 697          US-A1- 2005 140 236
US-A1- 2007 126 304

## Description

TECHNICAL FIELD

The present disclosure relates to the field of electric motor, and more specially, to a motor rotor and a motor having same.

BACKGROUND OF THE INVENTION

As a new permanent magnet motor, the permanent magnet assisted synchronous reluctance motor combines the merit of the permanent magnet motor and that of the synchronous reluctance motor, and it has the advantages of high power density, wide range of speed regulation, high efficiency, small volume and so on. The permanent magnet assisted synchronous reluctance motor has prominent application prospect in the field of drive and speed regulation, and the formula for its magnetic torque is illustrated as follows:

$$\mathrm{T} = mp(L_q - L_d)i_d i_q + mp\Psi_{PM}i_q$$

Wherein, T is the output torque of the motor, and the performance of the motor can be improved by increasing the value of T; the first term, after T in the equation, is the reluctance torque; the second term is the permanent magnetic torque; $\Psi_{PM}$ is the maximum of the stator and rotor coupling flux generated by the permanent magnet of the motor; m is the number of the phases of the stator winding; $L_d$ and $L_q$ are respectively the d-axis inductance and the q-axis inductance, wherein d-axis refers to the axis that is coincide with the main magnetic pole axis; q-axis refers to the axis that is perpendicular to the main magnetic pole axis, wherein "perpendicular to" involves the electric angle; $i_d$ and $i_q$ respectively represent the armature current component along the d-axis and the armature current component along the q-axis.

In the prior art, the performance of the motor is improved mainly by improving the performance of the permanent magnet, i.e. the value of the composite torque is increased by increasing the permanent magnetic torque, so as to improve the efficiency of the motor. A common method is to embed rare earth permanent magnets in the motor. As rare earth belongs to non-renewable resources and is expensive, the wider application of this kind of motor is limited. Moreover, the pressing demand of further improving the efficiency of the motor cannot be satisfied only through improving the performance of the motor by means of improving the performance of the permanent magnet. What's more, if the permanent magnet is inserted into the motor, the edge of the rotor will be stretched and deformed or even ruptured when the rotor rotates at a high speed.

JPH09233744   A,   US2007126304   A1, US2005140236   A1,   JP2010213553   A   and CN101304204 A disclose prior art permanent magnet motors.

SUMMARY OF THE INVENTION

The present invention aims at providing a motor rotor and a motor having same.

The present invention provides a motor rotor according to the appended independent claim 1. Further optional features are recited in the appended dependent claims.

BRIEF DESCRIPTION OF THE DRAWINGS

The drawings of the present application are provided for further comprehension of the present disclosure. The illustrative embodiments of the present invention and the corresponding description aim at explaining the present disclosure but are not intended to restrict the present disclosure. Regarding the drawings:

Fig. 1 is a structural diagram illustrating the motor rotor according to the present disclosure;
Fig. 2 is a profile illustrating the stress distribution when the motor rotor rotates at a high speed according to the present disclosure;
Fig. 3 is a partial structural diagram illustrating the motor rotor according to the present disclosure;
Fig. 4 is a structural diagram illustrating the reinforcing structure of the motor rotor according to the present disclosure;
Fig. 5 is a schematic diagram illustrating the deformation of the motor rotor when it rotates at a high speed according to the present disclosure;
Fig.6 is a structural diagram illustrating the stator and the rotor of the motor according to the present disclosure.

DETAILED DESCRIPTION OF THE PREFERRED EMBODIMENTS

The embodiments of the present invention will be described in details with reference to the accompanying drawings.

The motor rotor according to the present disclosure comprises an iron core 10 and permanent magnets 20 provided therein. A plurality of sets of mounting slots 30 are circumferentially distributed in the iron core 10. Each set of mounting slots 30 comprises two or more layers of mounting slots 30 provided at intervals in radial direction of the iron core 10. There are a plurality of sets of permanent magnets 20, and the permanent magnets 20 of each set of permanent magnets 20 are correspondingly embedded into the mounting slots 30 of each set of mounting slots 30. An island-shaped region 12 is formed between each of the outermost layers of mounting slots 30 and the periphery of the iron core 10, and a reinforcing hole 13 is provided in the island-shaped region 12. A reinforcing rod 60 is provided in each reinforcing hole 13, and at each end of the iron core, ends of all reinforcing rods 60 are connected with a reinforcing member.

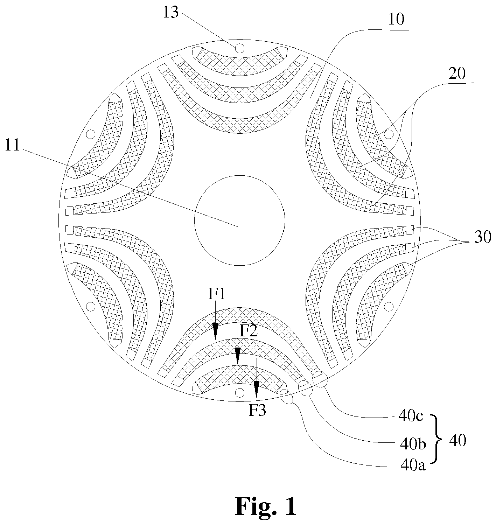

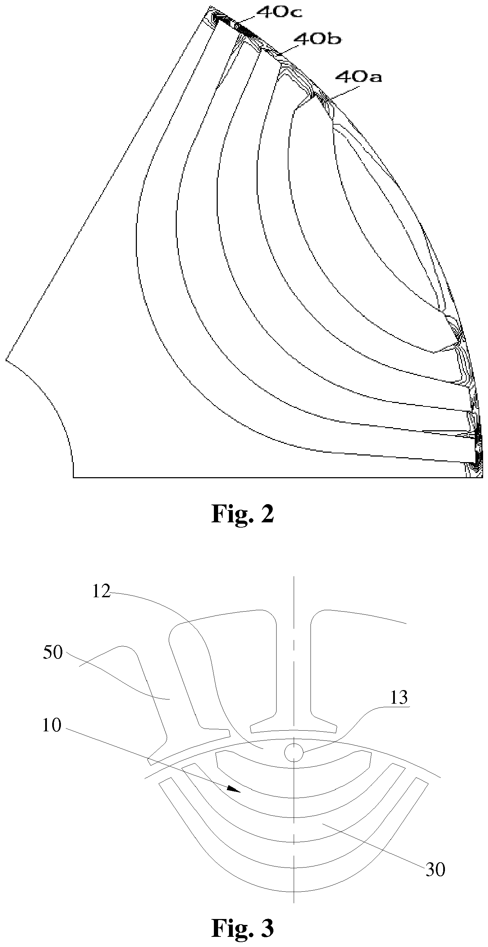

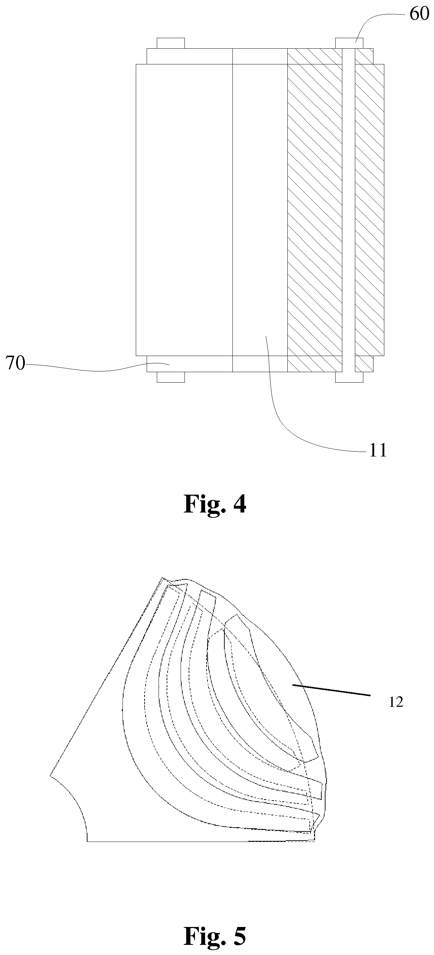

As shown in Figs. 1 and 3, the island-shaped regions 12 are formed between the outermost layers of mounting slots 30 and the periphery of the iron core 10. As shown in Fig.5, the motor rotor has the largest deformation at the island-shaped regions. As shown in Figs.3 and 4, the reinforcing hole 13 is provided in the island-shaped region 12 and along the symmetry axis of the set of the mounting slots on the rotor. The reinforcing rod 60 is provided in the reinforcing hole 13, and at each end of the iron core, ends of all reinforcing rods 60 are connected with the reinforcing member so as to reinforce the structure of the rotor. Preferably, a reinforcing hole 13 is provided in each island-shaped region 12, so as to further reinforce the structure of the rotor. Consequently, without changing the magnetic flux path of the rotor, just by means of disposing reinforcing holes 13 and reinforcing rods 60 in the rotor, the structure of the rotor is reinforced significantly and the deformation of the rotor is reduced when the rotor rotates at a high speed, thereby realizing the minimization of the clearance between the stator and the rotor, and enhancing the performance of the motor. Preferably, the reinforcing members are two fixing baffles 70, each of which is provided at a corresponding end of the iron core 10. The reinforcing rod 60 goes through the reinforcing hole 13 and is connected with the fixing baffles 70 at both ends.

In order to further reinforce the mechanical strength of the rotor, the reinforcing holes 13 are through holes provided in the rotor, and the reinforcing rods 60 are rivets. Each of the rivets goes through the corresponding through hole and is connected with the reinforcing members at both ends.

The reinforcing hole 13 passing through the rotor is provided along the symmetry axis of the set of mounting slots 30 of the rotor. The rivet goes through the reinforcing hole 13 and is riveted with the reinforcing members at both ends. Preferably, as shown in Fig.4, both ends of the iron core 10 of the rotor are respectively provided with a corresponding fixing baffle 70. The fixing baffles 70 and the rotor are riveted together integrally by the rivets going through the fixing baffles 70 at two ends of the iron core and going through the island-shaped regions 12 on the rotor. The deformation of the island-shaped regions is more strictly limited due to the restriction of the rivets. Consequently, the mechanical strength of the rotor is reinforced. In other embodiments, the reinforcing rod 60 is a screw bolt and is connected with the reinforcing hole 13 by means of screw-thread connection. Wherein, a rotor shaft hole 11 is provided in the center of the iron core of the rotor.

As shown in Fig.1, when the rotor rotates at a high speed, layers of each set of permanent magnets 20 respectively generate the centrifugal forces F1, F2 and F3, which are in a radial direction of the rotor. The centrifugal forces respectively act on corresponding arc-shaped steel sheets adjacent to each layer of permanent magnets 20, as shown in the regions pointed by the arrows in Fig.1. Flux barrier bridges 40a, 40b and 40c are respectively formed between ends of each layer of mounting slots, and the periphery of the rotor, wherein the flux barrier bridges connect respectively each layer of the mounting slot 30 and obstruct the magnetic leakage of the ends of each layer of permanent magnets 20. The centrifugal forces F1, F2 and F3 are eventually balanced respectively by opposite pulling forces endured by the flux barriers 40a, 40b and 40c. Fig. 2 shows a stress nephogram when the motor rotor rotates at a high speed. As sown in Fig.2, the flux barrier bridge 40c endures much larger stress than the flux barrier bridges 40a and 40b, so the flux barrier bridge 40c is most prone to deform and rupture.

The deformation extent of the edge of the rotor relies on the width of the flux barrier bridge 40 disposed at the periphery of the rotor. The larger the width of the flux barrier bridge 40 is, the higher the mechanical strength of the rotor. Subsequently, the motor can operate at a higher rotating speed. The negative effect is that the magnetic leakage at the ends of each set of permanent magnets 20 will be increased, which will reduce the effective magnetic flux in the stator and the rotor, and lead to degradation of the performance of the motor.

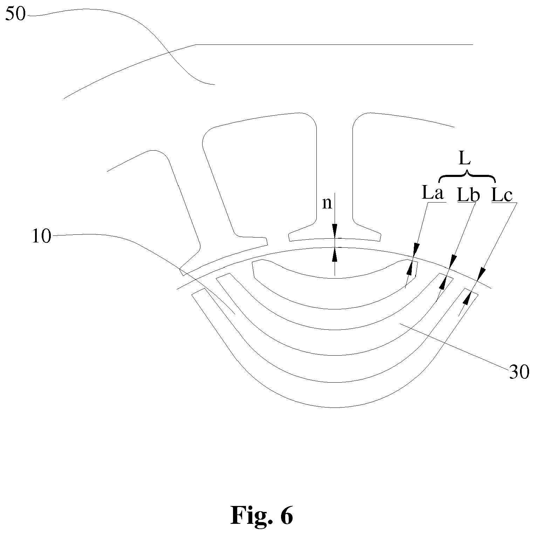

The present invention provides an optimization design of the flux barrier bridges formed between ends of the mounting slots 30 and the periphery of the rotor, and more especially, based on the multilayer structure of each set of permanent magnets 20, provides different designs for the width of the flux barrier bridges for different layers, so as to achieve gradient width for the flux barrier bridges. As shown in Fig.6, from the periphery of the iron core 10 toward the axis of rotation, values of distance L between ends of each layer of mounting slot 30 of each set and the periphery of the iron core 10 increase gradually.

When each set of mounting slots 30 comprises two layers of mounting slots, the formula $2L_a \geq L_b \geq 1.1L_a$ is satisfied, wherein, $L_a$ is the distance between the end of the outmost layer of mounting slot 30 and the periphery of the iron core 10, and $L_b$ is the distance between the end of the adjacent layer of mounting slot 30 and the periphery of the iron core 10.

As shown in Fig.6, when each set of mounting slots comprises three or more layers of mounting slots provided at intervals in redial direction of the iron core 10, the formulae $2L_b \geq L_c \geq 1.2L_b$ and $2L_a \geq L_b \geq 1.1L_a$ are satisfied, wherein, $L_a$, $L_b$ and $L_c$ are respectively the distance between the periphery of the iron core 10 and the ends of the three mounting slots 30 in an order from the outmost layer of mounting slot 30 to the center of the iron core.

Fig.5 is a diagram illustrating the deformation of the motor rotor when it rotates at a high speed. In Fig.5, the broken line represents the structure of the rotor when the rotor is still and the real line represents the structure of the rotor after the rotor deforms. As shown in Fig.5, the island-shaped region at the outmost layer of magnetic steel slot has the largest deformation, that is, the rotor deforms along the symmetry axis of the mounting slots 30. However, when the value of L satisfies the formulae above, the deformation can be controlled under $20\mu m$ and the stress of the flux barrier bridges 40c also can be controlled within the safe range.

As can be seen from above, when each set of mounting slots 30 is provided with three or more layers of mounting slots at intervals along the radial direction of the iron core 10, the distances between the ends of the mounting slots 30 and the periphery of the iron core 10 also satisfy the formula $2L_a \geq L_b \geq 1.1L_a$ above, wherein Lb is the distance between the end of the mounting slot 30 (which is the closest to the center of the circle) and the periphery of the iron core 10, La is the distance between the second closest mounting slot to the center of the circle and the periphery of the iron core 10. The limitation of the two ranges can be implemented separately or jointly, either way of implementation can improve the mechanical strength of the rotor and reduce the deformation extent of the rotor when it rotates at a high speed.

The present disclosure further provides a motor comprising a motor stator 50 and the motor rotor described above. The motor rotor is disposed at the inner side of the motor stator 50. The motor further comprises fixing baffles 70. Rivets go through the fixing baffles 70 and the iron core 10 and connect the fixing baffles 70 to the rotor. The spacing n between the inner perimeter of the motor stator 50 and the outer periphery of the motor rotor is within the range of $0.35mm \leq n \leq 0.55mm$.

The deformation extent of the edge of the rotor relies on the width of the flux barrier bridges disposed at the periphery of the rotor. The larger the width of the flux barrier bridge 40 is, the higher the mechanical strength of the rotor is. Subsequently, the motor can operate at a higher rotating speed. The negative effect is that the magnetic leakage at the ends of each set of permanent magnets 20 will be increased, which will reduce the efficiency of the motor. The present invention provides the optimization design of the flux barrier bridges formed between ends of the magnet steel slots and the periphery of the rotor, and more especially, based on the multilayer structure of each set of permanent magnets, provides a design of gradient width for the flux barrier bridges, which improves the mechanical strength of the rotor, and reduces the deformation extent of the rotor when it rotates at a high speed.

Additionally, the reinforcing holes are provided in the island-shaped regions 12 at the outmost layer of the mounting slots 30, and two ends of the iron core 10 of the rotor are provided with fixing baffles 70. Bolts or rivets go through the fixing baffles 70 at two ends of the iron core and the island-shaped regions 12 to fix the iron core 10 and the fixing baffles 70 together integrally. Without changing the magnetic flux path of the rotor, the present invention reinforces the structure of the rotor greatly, reduces the deformation extent of the rotor when it rotates at a high speed, thereby realizing the minimization of the clearance between the stator and the rotor, and enhancing the performance of the motor.

Subsequently, the spacing n between the rotor with multilayer structure of embedded permanent magnets and the stator 50 can be designed smaller, thereby the loss of the magnetic flux will be less and the performance of the motor will be improved. According to practical tests, when n satisfies the formula $0.35mm \leq n \leq 0.55mm$, the performance of the motor and the deformation extent of the rotor can meet the requirements of reliability.

It can be seen from the above that the embodiments of the present invention can achieve the following technical effects:

The motor rotor and the motor having same of the present disclosure define the proper values of the width of the flux barrier bridges and the features of each flux barrier bridge in the multilayer structure; and define that the fixing baffles at two ends and the island-shaped regions at the outmost layer of the mounting slots in the iron core of the rotor are connected together integrally, which enhances the mechanical strength of the rotor, and improves the reliability of the rotor, thereby enabling the clearance between the stator and the rotor be made smaller, and improving the performance of the motor.

The preferred embodiments described above are not restricted. It will be understood by those skilled in the art that various amendments and changes may be made therein without departing from the scope of the disclosure.

**Claims**

1. A motor rotor, comprising an iron core (10) and a plurality of sets of permanent magnets (20) provided therein, wherein:

   a plurality of sets of mounting slots (30) are circumferentially distributed in the iron core (10);
   the permanent magnets (20) of each set of permanent magnets (20) are correspondingly embedded into the mounting slots (30) of each set of mounting slots;
   a region (12) is formed between each outermost layer of mounting slot (30) and the periphery of the iron core (10), and a reinforcing hole (13) is provided in at least one of the regions (12); a reinforcing rod (60) is provided in each reinforcing hole (13); and at each end of the iron core, ends of all reinforcing rods (60) are connected with a reinforcing member;
   wherein the reinforcing member includes two fixing baffles (70), each of which is provided at a corresponding end of the iron core (10); and wherein the reinforcing rod (60) goes through the reinforcing hole (13) and is connected with the fixing baffles (70) at both ends; wherein from the periphery of the iron core (10) toward the axis of rotation, values of radial distance L between extremities of each layer of mounting slot (30) of each set and the periphery of the iron core (10) increase gradually;

each set of mounting slots comprises three or more layers of mounting slots (30) provided at intervals in radial direction of the iron core (10); and

formulae $2L_b \geq L_c \geq 1.2L_b$ and $2L_a \geq L_b \geq 1.1L_a$ are satisfied, wherein, $L_a$, $L_b$ and $L_c$ are respectively the radial distance between the periphery of the iron core (10) and extremities of three mounting slots (30), which is in an order from the outmost layer of mounting slot (30) to the center of the iron core.

2. The motor rotor according to claim 1, wherein: the reinforcing hole (13) is a through hole provided in the rotor; the reinforcing rod (60) is a rivet; and each of the rivets goes through the corresponding through hole and is connected with the reinforcing members at both ends.

3. The motor rotor according to claim 1, wherein: each region (12) corresponding to each set of mounting slots (30) is provided with said reinforcing hole (13).

4. A motor, comprising a motor stator (50) and the motor rotor according to any one of the claims 1 to 3, wherein: the motor rotor is disposed at an inner side of the motor stator (50).

5. The motor according to claim 4, further comprising two fixing baffles (70); the rivets go through the fixing baffles (70) and the iron core (10), and connect the fixing baffles (70) to the rotor.

6. The motor according to claim 4, wherein: a spacing n between an inner perimeter of the motor stator 50 and an outer periphery of the motor rotor is within the range of 0.35 mm $\leq$ n $\leq$ 0.55 mm.

**Patentansprüche**

1. Motorrotor, umfassend einen Eisenkern (10) und mehrere Sätze von Permanentmagneten (20), darin bereitgestellt, wobei:

mehrere Sätze von Befestigungsschlitzen (30) umlaufend im Eisenkern (10) verteilt sind; die Permanentmagneten (20) von jedem Satz von Permanentmagneten (20) entsprechend in die Befestigungsschlitze (30) von jedem Satz von Befestigungsschlitzen eingebettet sind; ein Bereich (12) zwischen jeder äußersten Schicht von Befestigungsschlitzen (30) und dem Umfang des Eisenkerns (10) gebildet ist, und ein Verstärkungsloch (13) in zumindest einem der Bereiche (12) bereitgestellt ist; eine Verstärkungsstange (60) in jedem Verstärkungsloch (13) bereitgestellt ist; und an jedem Ende des Eisenkerns Enden aller Verstärkungsstangen (60) mit einem Verstärkungselement verbunden werden; wobei das Verstärkungselement zwei Befestigungsleitbleche (70) umfasst, die jeweils an einem entsprechenden Ende des Eisenkerns (10) bereitgestellt sind; und wobei die Verstärkungsstange (60) durch das Verstärkungsloch (13) geht und mit den Befestigungsleitblechen (70) an beiden Enden verbunden ist; wobei sich vom Umfang des Eisenkerns (10) in Richtung der Drehachse Werte von radialem Abstand L zwischen Extremitäten jeder Schicht von Befestigungsschlitzen (30) jedes Satzes und dem Umfang des Eisenkerns (10) allmählich vergrößern; wobei jeder Satz von Befestigungsschlitzen drei oder mehr Schichten von Befestigungsschlitzen (30) umfasst, die in Intervallen in radialer Richtung des Eisenkerns (10) angeordnet sind; und

wobei die Formeln $2 L_b \geq L_c \geq 1,2 L_b$ und $2 L_a \geq L_b \geq 1,1 L_a$ erfüllt sind, wobei $L_a$, $L_b$ und $L_c$ jeweils der radiale Abstand zwischen dem Umfang des Eisenkerns (10) und Extremitäten von drei Befestigungsschlitzen (30) sind, die der Reihe nach von der äußersten Schicht des Befestigungsschlitzes (30) zur Mitte des Eisenkerns reichen.

2. Motorrotor nach Anspruch 1, wobei: das Verstärkungsloch (13) ein im Rotor bereitgestelltes Durchgangsloch ist; wobei die Verstärkungsstange (60) ein Niet ist; und wobei jeder der Niete durch das entsprechende Durchgangsloch geht und an beiden Enden mit den Verstärkungselementen verbunden ist.

3. Motorrotor nach Anspruch 1, wobei: jeder Bereich (12) entsprechend jedem Satz von Befestigungsschlitzen (30) mit dem Verstärkungsloch (13) versehen ist.

4. Motor, umfassend einen Motorstator (50) und den Motorrotor nach einem der Ansprüche 1 bis 3, wobei: der Motorrotor an einer Innenseite des Motorstators (50) angeordnet ist.

5. Motor nach Anspruch 4, ferner umfassend zwei Befestigungsleitbleche (70); wobei die Niete durch die Befestigungsleitbleche (70) und den Eisenkern (10) gehen und die Befestigungsleitbleche (70) mit dem Rotor verbinden.

6. Motor nach Anspruch 4, wobei: ein Abstand n zwischen einem inneren Umfang des Motorstators 50 und einem äußeren Umfang des Motorrotors innerhalb des Bereichs von 0,35 mm ≤ n ≤ 0,55 mm liegt.

## Revendications

1. Rotor de moteur, comprenant un noyau de fer (10) et une pluralité d'ensembles d'aimants permanents (20) prévus dans celui-ci, dans lequel :

   une pluralité d'ensembles de fentes de montage (30) sont distribués de façon circonférentielle dans le noyau de fer (10) ;
   les aimants permanents (20) de chaque ensemble d'aimants permanents (20) sont incorporés de façon correspondante dans les fentes de montage (30) de chaque ensemble de fentes de montage ;
   une région (12) est formée entre chaque couche la plus extérieure de fente de montage (30) et la périphérie du noyau de fer (10), et un trou de renfort (13) est prévu dans au moins une des régions (12) ; une tige de renfort (60) est prévue dans chaque trou de renfort (13) ; et, à chaque extrémité du noyau de fer, des extrémités de toutes les tiges de renfort (60) sont raccordées à un élément de renfort ;
   dans lequel l'élément de renfort inclut deux chicanes de fixation (70), dont chacune est prévue à une extrémité correspondante du noyau de fer (10) ; et dans lequel la tige de renfort (60) passe à travers le trou de renfort (13) et est raccordée aux chicanes de fixation (70) aux deux extrémités ;
   dans lequel, depuis la périphérie du noyau de fer (10) vers l'axe de rotation, des valeurs de distance radiale L entre des extrémités de chaque couche de fente de montage (30) de chaque ensemble et la périphérie du noyau de fer (10) augmentent progressivement ;
   chaque ensemble de fentes de montage comprend trois, ou plus, couches de fentes de montage (30) prévues à des intervalles en direction radiale du noyau de fer (10) ; et
   les formules $2L_b \geq L_c \geq 1,2L_b$ et $2L_a \geq L_b \geq 1,1L_a$ sont respectées, dans lequel $L_a$, $L_b$ et $L_c$ sont respectivement la distance radiale entre la périphérie du noyau de fer (10) et des extrémités de trois fentes de montage (30), qui est dans un ordre depuis la couche la plus extérieure de fente de montage (30) jusqu'au centre du noyau de fer.

2. Rotor de moteur selon la revendication 1, dans lequel : le trou de renfort (13) est un trou débouchant prévu dans le rotor ; la tige de renfort (60) est un rivet ; et chacun des rivets passe à travers le trou débouchant correspondant et est raccordé aux éléments de renfort aux deux extrémités.

3. Rotor de moteur selon la revendication 1, dans lequel : chaque région (12) correspondant à chaque ensemble de fentes de montage (30) est pourvue dudit trou de renfort (13).

4. Moteur, comprenant un stator de moteur (50) et le rotor de moteur selon une quelconque des revendications 1 à 3, dans lequel : le rotor de moteur est disposé au niveau d'un côté intérieur du stator de moteur (50).

5. Moteur selon la revendication 4, comprenant en outre deux chicanes de fixation (70) ; les rivets passant à travers les chicanes de fixation (70) et le noyau de fer (10), et raccordant les chicanes de fixation (70) au rotor.

6. Moteur selon la revendication 4, dans lequel : un espacement n entre un périmètre intérieur du stator de moteur (50) et une périphérie extérieure du rotor de moteur est dans la plage de 0,35 mm ≤ n ≤ 0,55 mm.

**Fig. 1**

**Fig. 2**

**Fig. 3**

60

70

11

**Fig. 4**

12

**Fig. 5**

**Fig. 6**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H09233744 A
- US 2007126304 A1
- US 2005140236 A1
- JP 2010213553 A
- CN 101304204 A